# EUROPEAN PATENT SPECIFICATION

(11) **EP 3 202 264 B1**
(45) Date of publication and mention of the grant of the patent: **10.04.2019**
(21) Application number: 17153878.8
(22) Date of filing: 31.01.2017
(51) Int. Cl.: A01N 27/00, A01N 25/10, A01N 25/34, A01P 7/00

(54) **SUSTAINED RELEASE PHEROMONE PREPARATION**
PHEROMONPRÄPARAT MIT VERZÖGERTER FREISETZUNG
PRÉPARATION DE PHÉROMONE À LIBÉRATION PROLONGÉE

(30) Priority: 03.02.2016 JP 2016018835
(43) Date of publication of application: 09.08.2017
(73) Proprietor: Shin-Etsu Chemical Co., Ltd., Tokyo 100-0004 (JP)
(72) Inventor: OHNO, Erina, Niigata-ken (JP); YAMASHITA, Miyoshi, Niigata-ken (JP); KINSHO, Takeshi, Niigata-ken (JP)
(74) Representative: Vidon Brevets & Stratégie

(56) References cited:
- JP-B2- 5 567 615
- US-A1- 2008 011 871
- US-A1- 2012 156 165
- US-A1- 2014 308 328
- MARIE ET AL: "Control of n-alkanes crystallization by ethylene-vinyl acetate copolymers", ANALYTICAL SCIENCES, THE JAPAN SOCIETY FOR ANALYTICAL CHEMISTRY, US, vol. 290, no. 2, 15 October 2005 (2005-10-15), pages 406-418, XP005018821, ISSN: 0021-9797

## Description

### BACKGROUND OF THE INVENTION

### 1. Field of the Invention

The present invention relates to a sustained release pheromone preparation targeting an insect pest having an aliphatic hydrocarbon compound as a pheromone substance.

### 2. Description of the Related Art

What is important for establishing an insect pest control technology using pheromone is to sustainedly release a sufficient amount of pheromone from an attraction source to attract an insect pest with respect to the mass trapping, and to diffuse a sufficient amount of pheromone for mating disruption throughout a farm field to be controlled with respect to the mating disruption. Since insect pests typically emerge for a long period of time from spring to autumn, the mass trapping and the mating disruption can be carried out during the emergence period by gradually releasing a pheromone substance from a sustained release pheromone preparation comprising the pheromone substance therein. In order to establish a control technology making use of pheromone, development of a sustained release pheromone preparation against a target insect pest is very important.

A sustained release pheromone preparation sealed in a container such as a cap, a tube, a laminated bag or a capsule made of a polymer such as rubber, polyethylene, polypropylene, an ethylene-vinyl acetate copolymer containing 90% by weight or more of ethylene units or polyvinyl chloride is used to continuously release a predetermined amount or higher of an active ingredient over a long period of time (JP 11-069936A).

As the polymer, polyolefin-based plastics typified by polyethylene are available in various grades different in properties so that they provide wide selection of materials, and are inexpensive because they are general-purpose plastics. Further, the polyolefin-based plastics can be subjected to various types of moldings such as extrusion, film molding, stretch molding and injection molding due to excellent formability. In addition, they are excellent in mechanical strength, particularly in mechanical strength at low temperatures so that they can also be used even in a low-temperature period or a low temperature region. Still further, an aliphatic aldehyde, ester or alcohol compound contained by many of the pheromone substances of insect pests belonging to the order Lepidoptera is typically in a liquid form at normal temperature so that a control effect can be obtained by using a sustained release pheromone preparation comprising a homogenous membrane such as polyethylene membrane (JP 57-009705A).

US2014/308328A1, JP5567615B2, US2008/011871A1 and US2012/156165A1 disclose pheromone release dispensers made of ethylene-vinyl acetate. These dispensers are not adapted to the release into the air of hydrocarbon pheromones. Marie et al.: "Control of n-alkanes crystallization by ethylene-vinyl acetate copolymers", Analytical sciences, vol. 290, No. 2, (2005-10-15), page 406-418, XP005018821, disclose that the crystallization of such hydrocarbon pheromones is altered in the presence of dissolved ethylene-vinyl acetate.

### SUMMARY OF THE INVENTION

When a pheromone substance is an aliphatic hydrocarbon compound having 20 to 35 carbon atoms, it is difficult to release it into the air from a container containing a polyethylene membrane. It is because it is in a solid form at normal temperature, differing from an aliphatic aldehyde, ester or alcohol compound in a liquid form at normal temperature, and has remarkably low permeability through a polyethylene membrane. Since it is necessary to keep a sufficient release amount from a sustained release pheromone preparation for the mass trapping or mating disruption, there is a demand for the development of a sustained release pheromone preparation toward an insect pest having, as a pheromone substance, an aliphatic hydrocarbon compound having such a melting point that the aliphatic hydrocarbon compound is in a solid form at normal temperature.

An object of the invention is to provide a sustained release pheromone preparation which can release a pheromone substance at a high rate throughout the control period of an insect pest having, as the pheromone substance, a C₂₀₋₃₅ aliphatic hydrocarbon compound having such a melting point that the aliphatic compound is in a solid form at normal temperature.

The inventors first thought that addition of a dissolving agent or a heating action was necessary for dissolving an aliphatic hydrocarbon compound which was in a solid form at normal temperature. However, further investigation has revealed that its liquid form can be maintained by changing the material of a membrane used for a sustained release pheromone preparation. The inventors have found that as a material of the membrane, an ethylene-vinyl acetate copolymer (hereinafter may be abbreviated as "EVA"), particularly EVA having high content of vinyl acetate unit, makes it possible to suppress solidification of the once-melted aliphatic hydrocarbon compound having such a melting point that the aliphatic hydrocarbon compound is in a solid form at normal temperature, maintain the liquid form, and enhance the permeability rate and the release rate into the air of the aliphatic hydrocarbon compound from a plastic container; and have completed the invention.

In the invention, there is provided a sustained release pheromone preparation comprising a membrane of an ethylene-vinyl acetate copolymer and a C₂₀₋₃₅ aliphatic hydrocarbon compound which is carried in a liquid form by the membrane, is permeable through the membrane, and has such a melting point that the aliphatic hydrocarbon compound is in a solid form at the temperature from 5 to 35°C, wherein the preparation targets an insect pest having the aliphatic hydrocarbon compound as a pheromone substance.

According to the invention, the sustained release pheromone preparation can maintain a high pheromone release rate throughout the control period of an insect pest having, as a pheromone substance, an aliphatic hydrocarbon compound having such a melting point that the aliphatic hydrocarbon compound is in a solid form at the temperature from 5 to 35°C.

### DETAILED DESCRIPTION OF THE PREFERRED EMBODIMENTS

In the invention, an insect pest to which the sustained release pheromone preparation is applied is not particularly limited insofar as it is an insect pest having, as a pheromone substance, a C₂₀₋₃₅ aliphatic hydrocarbon compound having such a melting point that the aliphatic hydrocarbon compound is in a solid form at the temperature from 5 to 35°C.

Examples of the insect pest include insects belonging to the order Hemiptera such as Pear Psylla (Cacopsylla pyricola, Cacopsylla pyri, or Cacopsylla chinensis).

The term "normal temperature" means a temperature of from 5 to 35°C. The C₂₀₋₃₅ aliphatic hydrocarbon compound of the invention has a melting point of preferably 20°C or more.

The C₂₀₋₃₅ aliphatic hydrocarbon compound of the invention may have any of linear, branched and cyclic structures. A bond of the aliphatic hydrocarbon compound may be a saturated bond or unsaturated bond. Examples of the aliphatic hydrocarbon compound include substances having one or more methyl groups in the carbon skeleton thereof such as 2-methyltricosane (having 24 carbon atoms), 3-methyltricosane (having 24 carbon atoms), 2-methylpentacosane (having 26 carbon atoms), 3-methylpentacosane (having 26 carbon atoms), 3-ethyltetracosane (having 26 carbon atoms), 2-methylhexacosane (having 27 carbon atoms), 2-methylheptacosane (having 28 carbon atoms), 3-methylheptacosane (having 28 carbon atoms), 11-methylheptacosane (having 28 carbon atoms), 13-methylheptacosane (having 28 carbon atoms), 4,8-dimethylheptacosane (having 29 carbon atoms), 2-methyloctacosane (having 29 carbon atoms), 2-methylnonacosane (having 30 carbon atoms), 3-methylnonacosane (having 30 carbon atoms), 11-methylnonacosane (having 30 carbon atoms), 13-methylnonacosane (having 30 carbon atoms), 15-methylnonacosane (having 30 carbon atoms), 11-methylhentriacontane (having 32 carbon atoms), 13-methylhentriacontane (having 32 carbon atoms), 15-methylhentriacontane (having 32 carbon atoms), 11,15-dimethylhentriacontane (having 33 carbon atoms), 13,17-dimethylhentriacontane (having 33 carbon atoms), and 11-methyltritriacontane (having 34 carbon atoms).

The preparation may further comprise, as a pheromone substance other than the C₂₀₋₃₅ aliphatic hydrocarbon compound having such a melting point that the aliphatic hydrocarbon compound is in a solid form at the temperature from 5 to 35°C, an aldehyde compound, an ester compound, an alcohol compound, a ketone compound, a hydrocarbon compound or the like which has low reactivity toward the aliphatic hydrocarbon compound and does not decompose the aliphatic hydrocarbon compound.

As a material of the membrane of the sustained release pheromone preparation, an ethylene-vinyl acetate copolymer is selected because it can maintain a liquid form of the aliphatic hydrocarbon compound having such a melting point that the aliphatic hydrocarbon compound is in a solid form at the temperature from 5 to 35°C. From the standpoint of release performance and workability, a weight ratio of ethylene units to vinyl acetate units of EVA is preferably from 92:8 to 80:20, particularly preferably from 90:10 to 85:15. The vinyl acetate unit content is the content of vinyl acetate-derived repeating units of EVA, while the ethylene unit content is the content of ethylene-derived repeating units of EVA.

The molecular weight of EVA is not particularly limited. A weight average molecular weight (Mw) of EVA is preferably from 50,000 to 500,000 as measured by gel permeation chromatography (GPC) on basis of polystyrene from the standpoint of the release performance and workability.

When the membrane of the sustained release pheromone preparation is made of EVA which can maintain a liquid form of the aliphatic hydrocarbon compound having such a melting point that the aliphatic hydrocarbon compound is in a solid form at normal temperature, the aliphatic hydrocarbon compound can permeate the membrane even at a temperature not higher than the melting point. The EVA membrane may be formed into an entire container of the sustained release pheromone preparation such as tube, capsule, ampule or a bag, or may be formed into a part of the container such as a wall portion of the container. When a part of the container comprises the EVA membrane, the aliphatic hydrocarbon compound can be released from the membrane. In addition, when another part of the container comprises, for example, a polyethylene membrane, a pheromone substance other than the aliphatic hydrocarbon compound can be released simultaneously.

An amount of the compound carried by the membrane in the sustained release pheromone preparation is preferably from 30 to 1000 mg, more preferably from 50 to 500 mg.

The thickness of the EVA membrane varies depending on the kind of the pheromone substance, release period of time into the air, or the like. The thickness of the EVA membrane is typically from 0.03 to 0.07 mm.

From the standpoint of preventing UV-caused deterioration of the aliphatic hydrocarbon compound, the sustained release pheromone preparation may comprise an inorganic colorant such as iron oxide, chromium oxide, titanium oxide or carbon black; or an organic colorant such as polycyclic pigment or azo-based pigment; in an amount of preferably 3% by weight or less, more preferably 1% by weight or less.

Further, from the standpoint of prevention of the polymer deterioration during polymer use, the sustained release pheromone preparation may comprise an antioxidant such as a phenol-based antioxidant, a sulfur-based antioxidant or a phosphor-based antioxidant; and/or a stabilizer such as a benzotriazole-based or benzophenone-based ultraviolet absorbent. From the standpoint of workability improvement, the preparation may comprise an antiblocking agent such as a metal salt of a higher fatty acid or an inorganic powder; and/or a lubricant such as hydrocarbons, alcohols, a higher fatty acid, esters, a partial ester of polyhydric alcohol, a metal salt of higher fatty acid, natural wax, fatty acid amide or a polymer. The preparation may comprise the antioxidant, the stabilizer, the antiblocking agent and/or the lubricant, each in a typical amount of from 0.002 to 1 % by weight.

The sustained release pheromone preparation can be produced by the method comprising the steps of: filling a container formed by blow molding, extrusion or the like with a pheromone substance in a liquid form, and sealing the container. Alternatively, the sustained release pheromone preparation can be produced by the method comprising the steps of: filling the molded product with a pheromone substance in a liquid form through the same route as that for pushing out the air during the simultaneous molding, and sealing the container.

### EXAMPLES

Example and Comparative Example of the invention will hereinafter be described in detail. It should not be construed that the invention is limited to or by Example.

### <Example 1 and Comparative Example 1>

In Example 1, a sustained release pheromone preparation having an actual release surface area of 50 cm² was produced by forming a 0.05 cm-thick membrane of an ethylene-vinyl acetate copolymer (EVA) having a weight ratio of ethylene units to vinyl acetate units of 85:15 into a 5 cm × 6 cm bag having an opening, pouring 100 mg of 13-methylheptacosane melted in a temperature-controlled oven of 60°C into the bag through the opening, and then sealing the liquid-containing bag at a position 5 cm higher from the bottom side of the bag at a sealing temperature of 240°C.

In Comparative Example 1, a sustained release pheromone preparation was produced in the same manner as in Example 1 except for use of a 0.05-cm thick membrane of low-density polyethylene (LDPE).

Then the sustained release pheromone preparations thus produced in Example 1 and Comparative Example 1 were placed for 21 days under an environment of 15°C, and the appearance of the 13-methylheptacosane in each bag was observed.

The 13-methylheptacosane in the sustained release pheromone preparation of Example 1 was still melted so that the 13-methylheptacosane was being released. On the other hand, the sustained release pheromone preparation of Comparative Example 1 did not release the 13-methylheptacosane because it solidified.

## Claims

1. A sustained release pheromone preparation, comprising:
a membrane of an ethylene-vinyl acetate copolymer, and
at least one C₂₀₋₃₅ aliphatic hydrocarbon compound which is carried in a liquid form by the membrane, is permeable through the membrane, and has such a melting point that the aliphatic hydrocarbon compound is in a solid form at temperature of 5 to 35 °C,
wherein the preparation targets an insect pest having the aliphatic hydrocarbon compound as a pheromone substance.

2. The sustained release pheromone preparation according to Claim 1, wherein the aliphatic hydrocarbon compound is at least one selected from the group consisting of 2-methyltricosane, 3-methyltricosane, 2-methylpentacosane, 3-methylpentacosane, 3-ethyltetracosane, 2-methylhexacosane, 2-methylheptacosane, 3-methylheptacosane, 11-methylheptacosane, 13-methylheptacosane, 4,8-dimethylheptacosane, 2-methyloctacosane, 2-methylnonacosane, 3-methylnonacosane, 11-methylnonacosane, 13-methylnonacosane, 15-methylnonacosane, 11-methylhentriacontane, 13-methylhentriacontane, 15-methylhentriacontane, 11,15-dimethylhentriacontane, 13, 17-dimethylhentriacontane and 11-methyltritriacontane.

## Patentansprüche

1. Pheromonzubereitung mit verzögerter Freisetzung, umfassend:
eine Membran aus einem Ethylen-vinylazetat Co-polymer, und
mindestens eine aliphatische C₂₀₋₃₅ Kohlenwasserstoffverbindung, die in einer flüssigen Form von der Membran getragen wird, die Membran permeieren kann und einen solchen Schmelzpunkt hat, dass die aliphatische Kohlenwasserstoffverbindung bei einer Temperatur von 5 bis 35 °C in fester Form vorliegt,
wobei die Zubereitung auf Schadinsekten gerichtet ist, die die aliphatische Kohlenwasserstoffverbindung als Pheromon haben.

2. Pheromonzubereitung mit verzögerter Freisetzung nach Anspruch 1, wobei die aliphatische Kohlenwasserstoffverbindung mindestens eine ausgewählt aus der Gruppe bestehend aus 2-Methyltricosan, 3-Methyltricosan, 2-Methylpentacosan, 3-Methylpentacosan, 3-Ethyltetracosan, 2-Methylhexacosan, 2-Methylheptacosan, 3-Methylheptacosan, 11-Methylheptacosan, 13-Methylheptacosan, 4,8-Dimethylheptacosan, 2-Methyloctacosan, 2-Methylnonacosan, 3-Methylnonacosan, 11-Methylnonacosan, 13-Methylnonacosan, 15-Methylnonacosan, 11-Methylhentriacontan, 13-Methylhentriacontan, 15-Methylhentriacontan, 11,15-Dimethylhentriacontan, 13,17-Dimethylhentriacontan und 11-Methyltritriacontan ist.

## Revendications

1. Préparation de phéromone à libération prolongée, comprenant :
une membrane d'un copolymère d'éthylène-acétate de vinyle, et
au moins un composé hydrocarboné aliphatique en C₂₀ à C₃₅ qui est porté sous une forme liquide par la membrane, est perméable à travers la membrane, et a un point de fusion tel que le composé hydrocarboné aliphatique est sous une forme solide à une température de 5 à 35 °C,
dans laquelle la préparation cible un insecte nuisible ayant le composé hydrocarboné aliphatique en tant que substance de phéromone.

2. Préparation de phéromone à libération prolongée selon la revendication 1, dans laquelle le composé hydrocarboné aliphatique est au moins l'un sélectionné dans le groupe constitué du 2-méthyltricosane, du 3-méthyltricosane, du 2-méthylpentacosane, du 3-méthylpentacosane, du 3-éthyltracosane, du 2-méthylhexacosane, du 2-méthylheptacosane, du 3-méthylheptacosane, du 11-méthylheptacosane, du 13-méthylheptacosane, du 4,8-diméthylheptacosane, du 2-méthyloctacosane, du 2-méthylnonacosane, du 3-méthylnonacosane, du 11-méthylnonacosane, du 13-méthylnonacosane, du 15-méthylnonacosane, du 11-méthylhentriacontane, du 13-méthylhentriacontane, du 15-méthylhentriacontane, du 11,15-diméthylhentriacontane, du 13,17-diméthylhentriacontane et du 11-méthyltritriacontane.
